# FASCICULE DE BREVET EUROPEEN

(11) **EP 2 679 441 B1**
(45) Date de publication et mention de la délivrance du brevet: **15.10.2014**
(21) Numéro de dépôt: 13171918.9
(22) Date de dépôt: 13.06.2013
(51) Int. Cl.: B60N 2/48, F41H 7/02, B60N 2/24

(54) **Siège a appuie-tête formant assise et appuie-tête pour un tel siège**
Sitz mit Kopfstütze, der eine Sitzfläche bildet, und eine Kopfstütze für einen solchen Sitz
Seat with headrest forming seating and headrest for such a seat

(30) Priorité: 28.06.2012 FR 1201833
(43) Date de publication de la demande: 01.01.2014
(73) Titulaire: NEXTER Systems, 42328 Roanne Cedex (FR)
(72) Inventeur: Garnier, Michel, 18023 Bourges Cedex (FR)
(74) Mandataire: Chaillot, Geneviève

(56) Documents cités:
- EP-A1- 2 135 770
- EP-A2- 2 221 211
- WO-A2-2006/022880
- DE-B3- 10 317 314
- US-A- 3 625 563

## Description

La présente invention concerne le domaine des sièges pour véhicule militaire, notamment de type à tourelle(s) tel qu'un char, et porte, en particulier, sur un siège à appuie-tête, notamment pivotant, formant assise et sur un appuie-tête pour un tel siège.

Les véhicules militaires destinés à être équipés de sièges selon la présente invention comprennent dans leur toit ou leur tourelle une ou plusieurs ouvertures au-dessous de chacune desquelles est installé un siège et à travers chacune desquelles un opérateur du véhicule, tel qu'un chef de char ou un tireur, peut passer le haut du corps, dans une position dite tête sortie, afin de guider le véhicule ou de communiquer avec l'extérieur. Un tel siège est connu du EP2135770

Dans la présente demande, on entend par « position tête sortie » la position de l'opérateur lorsqu'au moins sa tête dépasse d'une ouverture du toit du véhicule.

A l'heure actuelle, les sièges utilisés dans ces véhicules sont des sièges que l'on peut qualifier, de manière générale, comme étant classiques, en ce qu'ils comprennent une assise, un dossier et un appuie-tête.

Avec les sièges classiques, pour passer de la position dite tête rentrée, dans laquelle l'opérateur est assis dans le siège, avec son dos contre le dossier, l'arrière de sa tête contre l'appuie-tête et le haut de son corps qui ne s'étend pas dans l'ouverture au-dessus du siège, à la position tête sortie, l'opérateur doit se lever et se positionner debout sur l'assise du siège.

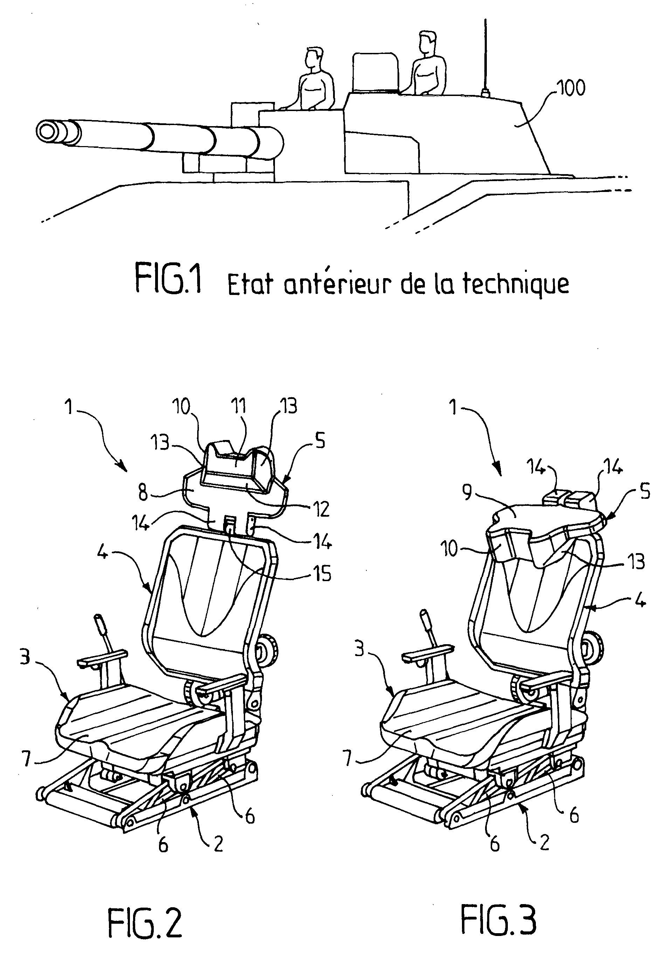

Un tel positionnement présente cependant l'inconvénient que, dans la position tête sortie, tout le haut du corps de l'opérateur dépasse du toit, comme on peut le voir sur la Figure 1 sur laquelle a été représentée la partie supérieure d'un char 100 comportant deux ouvertures et équipé de deux sièges classiques (non représentés).

Cela rend l'opérateur très vulnérable et difficile à protéger.

Il existe donc un besoin pour une solution autorisant une position tête sortie d'un opérateur qui rend minimale la vulnérabilité de l'opérateur tout en lui offrant une bonne visibilité et en lui permettant de communiquer avec l'extérieur.

La présente invention vise à satisfaire ce besoin, en proposant un siège muni d'un appuie-tête pouvant être déplacé par rapport au dossier pour constituer une assise sur laquelle l'opérateur peut s'asseoir lorsqu'il se trouve dans la position tête sortie, dans laquelle, grâce à l'assise formée par l'appuie-tête, seule une partie du haut du corps de l'opérateur, et notamment seule la tête, dépasse du toit du véhicule.

La présente invention a donc pour objet un siège de véhicule, notamment de véhicule militaire de type à tourelle(s), destiné à être installé au-dessous d'une ouverture du toit ou de la ou de l'une des tourelles du véhicule, le siège comprenant une assise, un dossier et un appuie-tête présentant une face avant et une face arrière opposées et monté sur le dossier de façon à pouvoir être déplacé entre une première position, redressée, dans laquelle ladite face avant se situe globalement dans le prolongement du dossier et constitue une surface d'appui pour la tête d'une personne assise sur le siège avec son dos contre le dossier, et une seconde position dans laquelle l'appuie-tête a été déplacé pour que sa face avant soit en regard de l'assise du siège, le siège étant caractérisé par le fait qu'il comprend des moyens d'arrêt du déplacement de l'appuie-tête et de maintien de ce dernier dans la seconde position dans laquelle l'appuie-tête peut supporter le poids d'une personne assise sur la face arrière de l'appuie-tête qui forme ainsi une assise sur laquelle une personne peut s'asseoir avec ses pieds sur l'assise du siège.

Ainsi, avec le siège selon la présente invention, seule la tête de l'opérateur peut dépasser hors de l'ouverture du véhicule lorsque l'opérateur est en position tête sortie, ce qui rend minimale sa vulnérabilité tout en lui offrant une bonne vision de l'environnement et en lui permettant de communiquer avec l'extérieur.

On note ici que la distance sur laquelle l'opérateur dépasse du toit du véhicule dépend de la garde au toit et que le siège peut comprendre des moyens de réglage en hauteur permettant de régler la hauteur de l'assise formée par la face arrière de l'appuie-tête, par exemple par déplacement de l'ensemble du siège ou par déplacement de l'appuie-tête seul, lequel réglage en hauteur permet de définir quelle partie du haut du corps de l'opérateur dépasse du toit.

Conformément à un mode de réalisation préféré, l'appuie-tête est monté pivotant sur le dossier, la seconde position étant une position rabattue dans laquelle l'appuie-tête a pivoté en direction de l'assise.

Les moyens d'arrêt et de maintien peuvent être agencés pour respectivement arrêter et maintenir l'appuie-tête dans la seconde position avec la face arrière de l'appuie-tête formant un angle entre plus ou moins 16 degrés par rapport à l'horizontale, la face arrière se trouvant de préférence sous un plan horizontal passant par la liaison, le cas échéant pivotante, de l'appuie-tête au dossier.

Les moyens d'arrêt et de maintien peuvent être portés par le dossier seul, par l'appuie-tête seul, ou par les deux.

Selon une caractéristique particulière facultative, les moyens d'arrêt et de maintien comprennent au moins une protubérance de la face avant de l'appuie-tête, la ou chaque protubérance étant prévue en partie supérieure de la face avant et présentant une première surface décalée de la face avant et destinée à servir de surface d'appui pour la tête d'une personne assise sur le siège avec son dos contre le dossier, et une seconde surface inclinée reliant la face avant au bord inférieur de ladite première surface de la protubérance, la ou chaque protubérance étant conformée de telle sorte que la seconde surface est en appui contre le dossier lorsque l'appuie-tête se trouve dans la position rabattue.

Prévoir de telle(s) protubérance(s) en tant que partie(s) des moyens d'arrêt et de maintien présente l'avantage de constituer une solution très simple à mettre en oeuvre, car elle ne requiert pas de mécanisme faisant intervenir des pièces mécaniques susceptibles de se casser.

L'appuie-tête peut être monté librement pivotant sur le dossier.

Le siège pourra avantageusement comprendre un moyen de rappel élastique ramenant l'appuie-tête dans sa position redressée.

De cette manière, l'appuie-tête est stable dans la position redressée, qui peut alors constituer la position nominale du siège. Par ailleurs l'appuie-tête reprend automatiquement sa position nominale lorsque l'opérateur rentre de façon urgente à l'abri à l'intérieur du véhicule.

Le siège pourra également comporter un moyen assurant le verrouillage de l'appuie-tête par rapport au dossier en position redressée.

L'angle entre la face arrière de l'appuie-tête dans la position redressée et la face arrière dans la seconde position peut être d'environ 100°.

La face arrière de l'appuie-tête peut être conformée en une surface d'assise.

La présente invention a également pour objet un appuie-tête pour un siège tel que défini ci-dessus.

On souligne ici qu'un tel appuie-tête, et en particulier un appuie-tête présentant une ou plusieurs protubérances comme décrit ci-dessus, peut être adapté sur tout type de dossier de siège, et notamment les sièges classiques équipant déjà les véhicules, avec si nécessaire ajout d'une liaison, le cas échéant pivotante, entre l'appuie-tête et le dossier permettant le déplacement de l'appuie-tête entre la position redressée et la seconde position. De cette manière, pour répondre au besoin énoncé ci-dessus, il suffit seulement de remplacer l'appuie-tête, et non l'ensemble du siège.

Pour mieux illustrer l'objet de la présente invention, on va en décrire ci-après un mode de réalisation particulier avec référence au dessin annexé.

Sur ce dessin :
- la Figure 1 est une vue en perspective de la partie supérieure d'un char équipé de sièges classiques, le chef de char et le tireur étant en position tête sortie ;
- les Figures 2 et 3 sont des vues en perspective d'un siège selon un mode de réalisation particulier de la présente invention, l'appuie-tête étant respectivement dans la position redressée et dans la position rabattue ;
- les Figures 4 et 5 sont des vues de côté du siège représenté respectivement sur les Figures 3 et 4, avec un opérateur assis respectivement sur l'assise du siège et sur la face arrière de l'appuie-tête ;
- la Figure 6 est une vue en perspective de la partie supérieure d'un char équipé de sièges selon le mode de réalisation particulier de la présente invention, le chef de char et le tireur étant en position tête sortie et assis sur les sièges de la manière représentée sur la Figure 5 ;
- la Figure 7 est une vue de détail avec coupe partielle de la liaison entre l'appuie-tête et la patte du dossier, vue montrant le moyen de verrouillage ; et
- la Figure 8 est une vue latérale de cette liaison permettant de visualiser le moyen de verrouillage engagé dans l'axe de pivotement.

Si l'on se réfère tout d'abord aux Figures 2 et 3, on peut voir que l'on a représenté en vue en perspective un siège 1 selon un mode de réalisation particulier de la présente invention.

Le siège 1 est composé d'un socle 2, d'une assise 3, d'un dossier 4 et d'un appuie-tête 5, et se distingue d'un siège classique par son appuie-tête 5.

Le socle 2 est destiné à être fixé au plancher du véhicule équipé du siège 1 et peut porter à cet effet des moyens de fixation audit plancher. Le socle 2 peut également comprendre des moyens de réglage du siège 1 en hauteur, par exemple un système à bras articulés 6, et des moyens de réglage du siège 1 en profondeur, ainsi que des moyens de commande de ces moyens de réglage en hauteur et en profondeur.

On souligne ici que la présente invention n'est pas limitée à la présence d'un socle 2, ni à une mise en oeuvre particulière du socle 2.

L'assise 3 est portée par le socle 2 et sa surface supérieure 7, sur laquelle un opérateur s'assoit en position tête rentrée, est conformée en une surface d'assise.

L'appuie-tête 5, monté pivotant sur le dossier 4, est composé d'un corps présentant une face avant 8 et une face arrière 9, opposées l'une à l'autre.

La face avant 8 présente, à sa partie supérieure, une protubérance 10 formée par une première surface 11 parallèle à la face avant 8 et décalée de celle-ci vers l'avant du siège 1, une seconde surface 12 reliant le bord inférieur de la première surface 11 à la face avant 8 en étant inclinée vers l'assise 3 dans la position redressée, représentée sur la Figure 2, et deux surfaces latérales 13 reliant les deux bords latéraux de la première surface 11 à la face avant 8.

A sa partie inférieure, le corps de l'appuie-tête 5 se prolonge par deux blocs 14 espacés l'un de l'autre en ménageant un espace dimensionné pour recevoir une patte 15 qui s'étend à partir du bord supérieur du dossier 4, l'appuie-tête 5 étant monté pivotant sur le dossier 4 par l'intermédiaire d'un axe de pivot 19 passant par des trous prévus dans les deux blocs 14 et la patte 15.

L'appuie-tête 5 peut ainsi pivoter entre une position redressée, représentée sur la Figure 2, et une position rabattue vers l'assise 3, représentée sur la Figure 3.

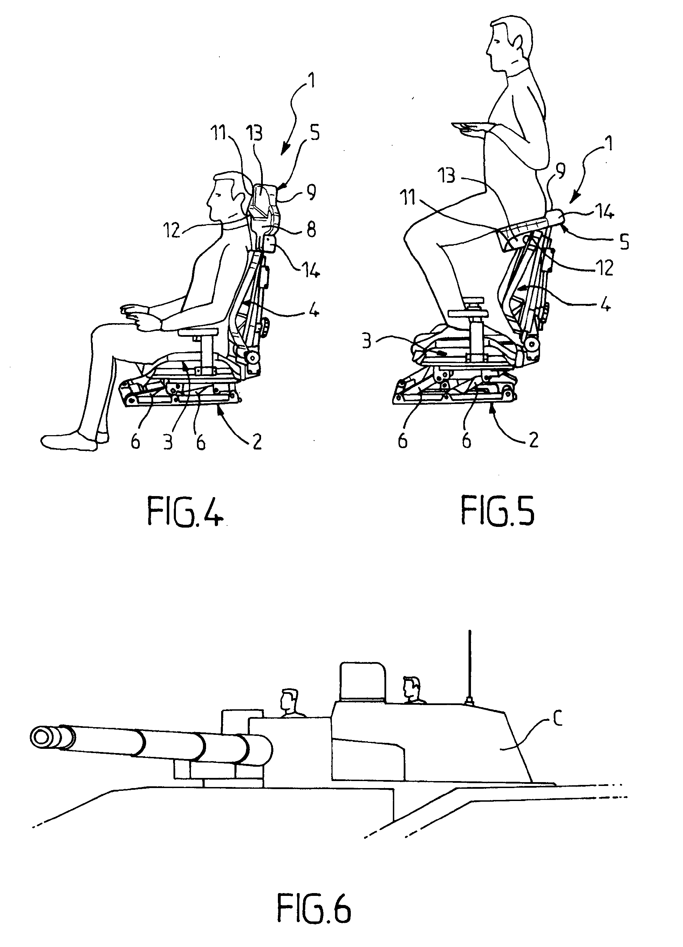

Dans la position redressée de l'appuie-tête 5, un opérateur peut s'asseoir dans le siège 1 de la manière habituelle, à savoir assis sur l'assise 3 avec son dos contre le dossier 4 et l'arrière de sa tête contre la première surface 11 de la protubérance 10, comme on peut le voir sur la Figure 4. L'opérateur se trouve alors en position tête rentrée.

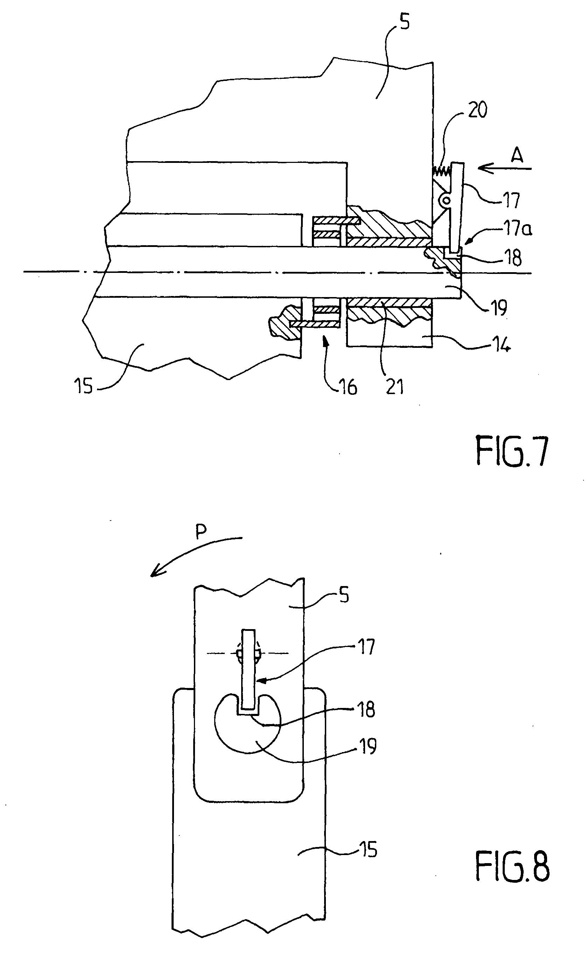

Comme on peut le voir sur les Figures 7 et 8, un ressort de torsion 16 (ressort spiral) a l'une de ses extrémités encastrée dans la patte 15 et son autre extrémité encastrée dans un bloc 14 de l'appuie-tête 5.

Ce ressort 16 est monté et dimensionné par ailleurs de telle sorte qu'il a pour effet de ramener l'appuie-tête 5 dans sa position redressée. Par ailleurs un levier basculant 17 est articulé sur un bloc 14. Une extrémité 17a du levier est engagée dans une encoche 18 réalisée dans l'axe 19 autour duquel pivote l'appuie-tête 5.

Le levier 17 assure le verrouillage de l'appuie-tête 5 dans sa position redressée. Il est maintenu en position de verrouillage par un ressort de compression 20. L'axe 19 est fixe par rapport à la patte 15. Une douille 21 permet à l'appuie-tête de pivoter par rapport à l'axe 19. Le levier 17 sera dimensionné pour résister aux chocs lors de la mise en oeuvre du véhicule et éviter que l'appuie-tête ne vienne heurter la tête de l'opérateur en cas de manoeuvre brutale du véhicule.

Lorsque l'opérateur souhaite faire passer l'appuie-tête en position rabattue, il appuie sur le levier 17 (flèche A), ce qui permet de dégager l'extrémité 17a du levier 17 de l'encoche 18 et autorise le pivotement du bloc 14 par rapport à l'axe 19. Il fait ensuite pivoter l'appuie-tête (flèche P à la Figure 8), ce qui a pour effet de contraindre le ressort de torsion 16.

La position rabattue est maintenue simplement par le poids de l'opérateur assis sur l'appui-tête.

Lorsque l'appuie-tête 5 est en position rabattue, la seconde surface 12, inclinée, de la protubérance 10 vient en appui contre la partie supérieure du dossier 4. La protubérance 10 arrête et maintient l'appuie-tête 5 de manière stable dans cette position rabattue, dans laquelle la face arrière 9 constitue une surface d'assise sur laquelle l'opérateur peut s'asseoir avec ses pieds sur l'assise 3, comme on peut le voir sur la Figure 5, l'opérateur se trouvant alors en position tête sortie.

On souligne ici que la protubérance 10 est positionnée et dimensionnée pour que l'inclinaison de la seconde surface 12, en combinaison avec l'inclinaison de la partie supérieure du dossier 4, soit telle que la face arrière 9, et en particulier la partie de la face arrière 9 sur laquelle s'assoit l'opérateur, s'étend sous le plan horizontal passant par l'axe de pivot et forme un angle d'environ 16 degrés par rapport à l'horizontale, ce qui permet à l'opérateur de prendre une posture d'assise naturelle lorsqu'il se trouve en position tête sortie.

On se réfère enfin à la Figure 6, sur laquelle on a représenté la partie supérieure d'un char C dans lequel deux opérateurs sont en position tête sortie, le char C étant identique au char 100 représenté sur la Figure 1, à l'exception du fait qu'il est équipé de sièges 1 selon le mode de réalisation particulier de la présente invention, et non de sièges classiques.

On peut voir sur la Figure 6 que seule la tête et le haut des épaules des deux opérateurs dépassent du toit du véhicule, les opérateurs étant assis sur les sièges 1 de la même manière que celle représentée sur la Figure 5, à savoir assis sur la face arrière 9 de l'appuie-tête 5 qui est placée en position rabattue.

Ainsi, on peut constater que le siège selon la présente invention permet de rendre minimale la vulnérabilité d'un opérateur en position tête sortie, tout en lui offrant une bonne visibilité et en lui permettant de communiquer avec l'extérieur.

Lorsque l'opérateur souhaite rentrer à l'intérieur du véhicule, il lui suffit de s'avancer légèrement pour ne plus être assis sur l'appui-tête 5. Grâce au ressort de rappel 16, l'appuie-tête reprend alors automatiquement sa position redressée. L'extrémité 17a du levier de verrouillage 17 s'engage automatiquement dans l'encoche 18 et assure le verrouillage de l'appuie-tête dans cette position redressée. On notera que l'urgence d'un changement de position d'un opérateur est toujours dans le sens d'un passage d'une position tête sortie vers une position tête rentrée avec retour de l'opérateur sous protection dans le véhicule.

Il est bien entendu que le mode de réalisation particulier qui vient d'être décrit a été donné à titre indicatif et non limitatif et que des modifications peuvent être apportées sans que l'on s'écarte pour autant du cadre de la présente invention.

On a en particulier décrit un ressort de rappel 16 sous forme de ressort spiral. Il est bien entendu possible de prévoir deux ressorts de rappel, un au niveau de chaque bloc 14 ou de les remplacer par un ressort de torsion hélicoïdal monté autour de l'axe 19 et engagé d'une part sur un bloc 14 et d'autre part sur la patte 15.

Il est bien sûr également possible de définir un moyen de verrouillage 17 de structure différente, par exemple comprenant un levier solidaire de l'axe 19 et s'engageant dans une encoche du bloc 14.

Enfin, les moyens d'arrêt et de maintien, qui comprennent les protubérances 10 dans le mode de réalisation particulier décrit ci-dessus, pourraient comprendre des ailes latérales portées par le dossier et sur lesquelles s'appliquerait, en position rabattue, un appuie-tête ne présentant pas de protubérance 10, les ailes latérales étant disposées pour ne pas gêner le dos de l'utilisateur lorsque ce dernier est assis sur le siège. De préférence, l'interaction dossier/appuie-tête se situerait au voisinage du rebord supérieur du dossier ou au niveau de la patte 15.

## Revendications

1. Siège (1) de véhicule, notamment de véhicule militaire de type à tourelle(s), destiné à être installé au-dessous d'une ouverture du toit ou de la ou de l'une des tourelles du véhicule, le siège (1) comprenant une assise (3), un dossier (4) et un appuie-tête (5) présentant une face avant (8) et une face arrière (9) opposées et monté sur le dossier (4) de façon à pouvoir être déplacé entre une première position, redressée, dans laquelle ladite face avant (8) se situe globalement dans le prolongement du dossier (4) et constitue une surface d'appui pour la tête d'une personne assise sur le siège (1) avec son dos contre le dossier (4), et une seconde position dans laquelle l'appuie-tête (5) a été déplacé pour que sa face avant (8) soit en regard de l'assise (3) du siège (1), le siège (1) étant **caractérisé par le fait qu'**il comprend des moyens d'arrêt du déplacement de l'appuie-tête et de maintien de ce dernier dans la seconde position dans laquelle l'appuie-tête peut supporter le poids d'une personne assise sur la face arrière de l'appuie-tête qui forme ainsi une assise sur laquelle une personne peut s'asseoir avec ses pieds sur l'assise du siège.

2. Siège selon la revendication 1, **caractérisé par le fait que** l'appuie-tête (5) est monté pivotant sur le dossier (4), la seconde position étant une position rabattue dans laquelle l'appuie-tête (5) a pivoté en direction de l'assise (3).

3. Siège selon l'une des revendications 1 et 2, **caractérisé par le fait que** les moyens d'arrêt et de maintien sont agencés pour respectivement arrêter et maintenir l'appuie-tête dans la seconde position avec la face arrière de l'appuie-tête formant un angle entre plus ou moins 16 degrés par rapport à l'horizontale, la face arrière (9) se trouvant de préférence sous un plan horizontal passant par la liaison, le cas échéant pivotante, de l'appuie-tête (5) au dossier (4).

4. Siège (1) selon l'une des revendications 2 et 3, **caractérisé par le fait que** les moyens (4, 10, 12) d'arrêt et de maintien comprennent au moins une protubérance (10) de la face avant (8) de l'appuie-tête (5), la ou chaque protubérance (10) étant prévue en partie supérieure de la face avant (8) et présentant une première surface (10) décalée de la face avant (8) et destinée à servir de surface d'appui pour la tête d'une personne assise sur le siège (1) avec son dos contre le dossier (4), et une seconde surface (12) inclinée reliant la face avant (8) au bord inférieur de ladite première surface (11) de la protubérance (10), la ou chaque protubérance (10) étant conformée de telle sorte que la seconde surface (12) est en appui contre le dossier (4) lorsque l'appuie-tête (5) se trouve dans la position rabattue.

5. Siège (1) selon l'une des revendications 2 à 4, **caractérisé par le fait que** l'appuie-tête (5) est monté librement pivotant sur le dossier (4).

6. Siège (1) selon l'une des revendications 1 à 5, **caractérisé par le fait qu'**il comporte un moyen de rappel élastique ramenant l'appuie-tête (5) dans sa position redressée.

7. Siège (1) selon l'une des revendications 1 à 6, **caractérisé par le fait qu'**il comporte un moyen assurant le verrouillage de l'appuie-tête (5) par rapport au dossier (4) en position redressée.

8. Siège (1) selon l'une des revendications 1 à 7, **caractérisé par le fait que** l'angle entre la face arrière (9) de l'appuie-tête (5) dans la position redressée et la face arrière (9) dans la seconde position est d'environ 100°.

9. Siège selon l'une des revendications 1 à 8, **caractérisé par le fait que** la face arrière (9) de l'appuie-tête (5) est conformée en une surface d'assise.

10. Appuie-tête (5) pour un siège (1) tel que défini à l'une des revendications 1 à 9.

## Patentansprüche

1. Sitz (1) für ein Fahrzeug, insbesondere für ein Drehturm-Militärfahrzeug, der dafür bestimmt ist, unter einer Dachöffnung oder dem Drehturm oder einem der Drehtürme des Fahrzeugs eingebaut zu werden, wobei der Sitz (1) ein Sitzteil (3), eine Rückenlehne (4) und eine Kopfstütze (5) umfasst, die eine Vorderseite (8) und eine Rückseite (9) aufweist, die einander gegenüberliegen, und an der Rückenlehne (4) derart montiert ist, dass sie zwischen einer ersten aufgerichteten Stellung, in der sich die Vorderseite (8) ganz allgemein in der Verlängerung der Rückenlehne (4) befindet und eine Stützfläche für den Kopf einer mit dem Rücken an der Rückenlehne (4) auf dem Sitz (1) sitzenden Person bildet, und einer zweiten Stellung bewegt werden kann, in die die Kopfstütze (5) bewegt wurde, damit sich ihre Vorderseite (8) gegenüber dem Sitzteil (3) des Sitzes (1) befindet, wobei der Sitz (1) **dadurch gekennzeichnet ist, dass** er Mittel zum Stoppen der Bewegung der Kopfstütze und zum Halten letzterer in der zweiten Stellung umfasst, in der die Kopfstütze das Gewicht einer auf der Rückseite der Kopfstütze sitzenden Person tragen kann, die somit ein Sitzteil bildet, auf das sich eine Person, mit den Beinen auf dem Sitzteil des Sitzes, setzen kann.

2. Sitz nach Anspruch 1, **dadurch gekennzeichnet, dass** die Kopfstütze (5) schwenkbar an der Rückenlehne (4) montiert ist, wobei es sich bei der zweiten Stellung um eine umgeklappte Stellung handelt, in der die Kopfstütze (5) in Richtung des Sitzteils (3) geschwenkt ist.

3. Sitz nach einem der Ansprüche 1 und 2, **dadurch gekennzeichnet, dass** die Stopp- und Haltemittel so angeordnet sind, dass sie die Kopfstütze stoppen beziehungsweise in der zweiten Stellung halten, wobei die Rückseite der Kopfstütze einen Winkel zwischen plus oder minus 16 Grad bezogen auf die Waagerechte bildet, wobei sich die Rückseite (9) vorzugsweise unter einer waagerechten Ebene befindet, die durch die gegebenenfalls schwenkbare Verbindung der Kopfstütze (5) mit der Rückenlehne (4) verläuft.

4. Sitz (1) nach einem der Ansprüche 2 und 3, **dadurch gekennzeichnet, dass** die Stopp- und Haltemittel (4, 10, 12) mindestens einen Vorsprung (10) der Vorderseite (8) der Kopfstütze (5) umfassen, wobei der oder jeder Vorsprung (10) im oberen Teil der Vorderseite (8) vorgesehen ist und eine erste Fläche (10), die zur Vorderseite (8) versetzt und dafür bestimmt ist, als Stützfläche für den Kopf einer mit dem Rücken an der Rückenlehne (4) auf dem Sitz (1) sitzenden Person zu dienen, und eine zweite geneigte Fläche (12) aufweist, die die Vorderseite (8) mit dem unteren Rand der ersten Fläche (11) des Vorsprungs (10) verbindet, wobei der oder jeder Vorsprung (10) so geformt ist, dass die zweite Fläche (12) an der Rückenlehne (4) anliegt, wenn sich die Kopfstütze (5) in der umgeklappten Stellung befindet.

5. Sitz (1) nach einem der Ansprüche 2 bis 4, **dadurch gekennzeichnet, dass** die Kopfstütze (5) frei schwenkbar an der Rückenlehne (4) montiert ist.

6. Sitz (1) nach einem der Ansprüche 1 bis 5, **dadurch gekennzeichnet, dass** er ein elastisches Rückstellmittel aufweist, das die Kopfstütze (5) wieder in ihre aufgerichtete Stellung bringt.

7. Sitz (1) nach einem der Ansprüche 1 bis 6, **dadurch gekennzeichnet, dass** er ein Mittel aufweist, das für die Verriegelung der Kopfstütze (5) bezüglich der Rückenlehne (4) in der aufgerichteten Stellung sorgt.

8. Sitz (1) nach einem der Ansprüche 1 bis 7, **dadurch gekennzeichnet, dass** der Winkel zwischen der Rückseite (9) der Kopfstütze (5) in der aufgerichteten Stellung und der Rückseite (9) in der zweiten Stellung ungefähr 100° beträgt.

9. Sitz nach einem der Ansprüche 1 bis 8, **dadurch gekennzeichnet, dass** die Rückseite (9) der Kopfstütze (5) als Sitzfläche geformt ist.

10. Kopfstütze (5) für einen Sitz (1) nach einem der Ansprüche 1 bis 9.

## Claims

1. A seat (1) for a vehicle, particularly for a turret-type military vehicle, intended to be installed below a opening of the roof or the turret or one of the turrets of the vehicle, the seat (1) comprising a sitting part (3), a backrest (4) and a headrest (5) having a front face (8) and a rear face (9) which are opposed and mounted on the backrest (4) so as to be moveable between a first upright position in which said front face (8) is generally located in the extension of the backrest (4) and constitutes a support surface for the head of a person seated on the seat (1) with his or her back against the backrest (4), and a second position in which the headrest (5) has been moved such that its front face (8) is facing the sitting part (3) of the seat (1), the seat (1) being **characterized by** the fact that it comprises means for stopping the displacement of the headrest and maintaining the latter in the second position in which the headrest can support the weight of a person seated on the rear face of the headrest, which thus forms a sitting part on which a person can sit down with his or her feet on the sitting part of the seat.

2. The seat according to claim 1, **characterized by** the fact that the headrest (5) is pivotally mounted on the backrest (4), the second position being a folded-down position in which the headrest (5) has pivoted toward the sitting part (3).

3. The seat according to one of claims 1 and 2, **characterized by** the fact that the stopping and maintaining means are arranged for stopping and maintaining the headrest in the second position, respectively, with the rear face of the headrest forming an angle between more or less 16 degrees with respect to the horizontal, the rear face (9) being preferably located below a horizontal plane passing through the connection, where required a pivotal connection, of the headrest (5) to the backrest (4).

4. The seat (1) according to one of claims 2 and 3, **characterized by** the fact that the stopping and maintaining means (4, 10, 12) comprise at least one protrusion (10) of the front face (8) of the headrest (5), the or each protrusion (10) being provided at an upper part of the front face (8) and having a first surface (10) offset from the front face (8) and intended to act as a support surface for the head of a person seated on the seat (1) with his or her back against the backrest (4), and a second tilted surface (12) connecting the front face (8) to the lower edge of said first surface (11) of the protrusion (10), the or each protrusion (10) being shaped such that the second surface (12) rests against the backrest (4) when the headrest (5) is in the folded-down position.

5. The seat (1) according to one of claims 2 to 4, **characterized by** the fact that the headrest (5) is mounted freely pivoting on the backrest (4).

6. The seat (1) according to one of claims 1 to 5, **characterized by** the fact that it comprises an elastic return means bringing the headrest (5) back in its upright position.

7. The seat (1) according to one of claims 1 to 6, **characterized by** the fact that it comprises a means ensuring the locking of the headrest (5) with respect to the backrest (4) in the upright position.

8. The seat (1) according to one of claims 1 to 7, **characterized by** the fact that the angle between the rear face (9) of the headrest (5) in the upright position and the rear face (9) in the second position is about 100°.

9. The seat (1) according to one of claims 1 to 8, **characterized by** the fact that the rear face (9) of the headrest (5) is shaped as a seating surface.

10. A headrest (5) for a seat (1) as defined in one of claims 1 to 9.
